# EUROPÄISCHE PATENTSCHRIFT

(11) **EP 0 304 815 B1**
(45) Veröffentlichungstag und Bekanntmachung des Hinweises auf die Patenterteilung: **27.10.1993**
(21) Anmeldenummer: 88113488.6
(22) Anmeldetag: 19.08.1988
(51) Int. Cl.: H04J 3/06

(54) **Schaltungsanordnung zur Erkennung und/oder Überwachung von in einem seriellen Datenstrom enthaltenen Synchronworten**
Circuit for the detection and/or control of synchronisation words comprised in a serial data stream
Circuit de détection et/ou de contrôle de mots de synchronisation contenus dans une transmission en série de données

(30) Priorität: 28.08.1987 DE 3728792
(43) Veröffentlichungstag der Anmeldung: 01.03.1989
(73) Patentinhaber: TELEFUNKEN Fernseh und Rundfunk GmbH, 30453 Hannover (DE)
(72) Erfinder: Rottmann, Dieter, Dipl.-Ing., D-3000 Hannover 61 (DE); Laabs, Jürgen, Dipl.-Ing., D-3017 Pattensen (DE)

(56) Entgegenhaltungen:
- US-A- 4 607 378

## Beschreibung

Die Erfindung betrifft eine Schaltungsanordnung zur Erkennung und/oder Überwachung von in einem seriellen Datenstrom enthaltenen Synchronworten gemäß dem Oberbegriff des Anspruchs 1. Eine solchen Schaltungsanordnung ist bekannt aus US-A-4 607 378.

Bei der seriellen Übertragung digitaler Signale, die in eine vorgegebene Rahmenstruktur eingeordnet sind, ist es bekannt, für die Datenverarbeitung einen Datenprozessor einzusetzen, der programmgesteuert Berechnungen durchführt. Zusammengehörige Daten werden durch Steuersignale gekennzeichnet, die mittels einer Schaltungsanordnung anhand im Datenstrom enthaltener Synchronworte erzeugt werden.

Es ist das Ziel, derartige Schaltungsanordnungen zusammen mit andren zu integrieren, um so die benötigte Anzahl von Einzelteilen zu reduzieren, den Bauraum zu verringern und die Zuverlässigkeit der Schaltungsanordnung zu erhöhen. Die Größe der Chipfläche, auf der Baugruppen integriert werden können, ist jedoch begrenzt. Es kommt deshalb darauf an, den zur Verfügung stehenden Platz besonders sparsam auszunutzen.

Der Erfindung liegt die Aufgabe zugrunde, unter Berücksichtigung der bei hochintegrierten Schaltungen knapp bemessen Chipflächen eine Schaltungsanordnung zu schaffen, die mit möglichst geringem Aufwand, insbesondere an Flip-Flop-Stufen, eine zuverlässige Erkennung und/oder Überwachung von in einem seriellen Datenstrom enthaltenen Synchronworten ermöglicht.

Diese Aufgabe wird bei einer Schaltungsanordnung nach dem Oberbegriff des Anspruchs 1 durch den im kennzeichnenden Teil angegebenen Merkmale gelöst.

Die erfindungsgemäße Schaltungsanordnung beschränkt sich bei der Prüfung der im Datenstrom vorhandenen Synchronworte auf die in einem Schieberegister vorhandenen Speicherzellen und vergleicht jeweils nur die in diesen Speicherzellen anliegenden Daten. Entspricht eine Datenkombination augenblicklich einem Synchronwort, so erscheint durch die logische UND-Verknüpfung am Ausgang des Verknüpfungsgliedes kurzzeitig ein erstes Erkennungs- oder Überwachungssignal. Die Schaltungsanordnung ist daher besonders geeignet, erstmalig aus einem Datenstrom eine Kombination herauszufinden, die einem Synchronwort entsprechen könnte.

Ist das Synchronwort länger als die im Schieberegister zur Verfügung stehenden Speicherzellen, so kann sich die erste Prüfung zunächst auf einen Teil des Synchronwortes beschränken. Zur Auswertung der übrigen Stellen kann anschließend dasselbe Schieberegister mit einem Sollwert geladen werden und der restliche Teil des Synchron-Wortes, der inzwischen in dem anderen Schieberegister steht, unmittelbar darauf Bit für Bit mit dem Sollwert verglichen werden. Das erste Schieberegister wird also doppelt ausgenutzt, wobei durch das Laden mit dem Sollwert unmittelbar nach der ersten Erkennung eines Teils des Synchron-Wortes keine Verzögerung bei der weiteren Prüfung eintritt.

Weiterbildungen und vorteilhafte Ausführungsformen ergeben sich aus den weiteren Ansprüchen, der Beschreibung und der Zeichnung, die ein Ausführungsbeispiel der Erfindung veranschaulicht.

In der Zeichnung zeigen:
- Fig. 1: ein die Erfindung verkörperndes Schaltbild als Bestandteil eines Empfängers für digitalen Satelliten-Rundfunk,

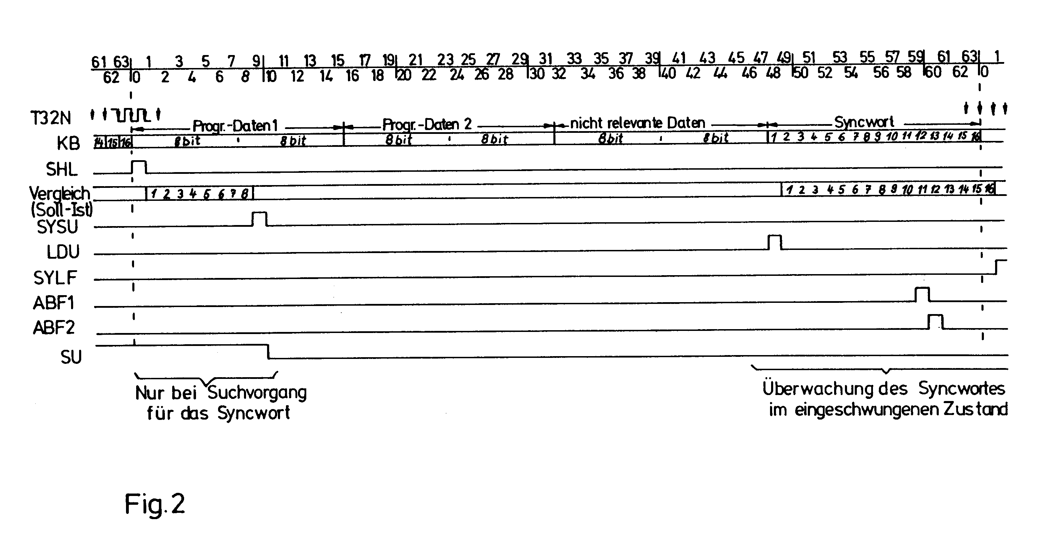

- Fig. 2: ein Impulsdiagramm zur Erläuterung der in Fig. 1 dargestellten Schaltung.

Der Empfänger für digitalen Satelliten-Rundfunk ist dafür vorgesehen, Hörfunkprogramme nach den Spezifikationen des Hörfunkübertragungsverfahrens in TV-SAT zu empfangen. Die Verschachtelung der Programme in eine Rahmenstruktur und die Unterbringung zusätzlicher Programminformationen in Sonderdienst-Rahmen und Sonderdienst-Überrahmen sind in der DE-OS 33 08 025 näher beschrieben.

Im vorliegenden Fall von Interesse sind der Sonderdienst-Rahmen SA und der Sonderdienst-Überrahmen SAÜ, die aus den im Hauptrahmen A nach den obengenannten Spezifikationen übertragenen Sonderdienstbit gebildet werden. Jeder Sonderdienst-Rahmen beginnt mit einem 16-stelligen Synchronwort, dem Datenworte mit Programmartinformationen über die ausgesandten Hörfunkprogramme folgen. Davon sind jedoch nur die vier folgenden Datenworte mit sinnvollen Informationen belegt, während die Daten der restlichen zwei Datenworte irrelevant sind.

Der Sonderdienst-Überrahmen SAÜ umfaßt acht Sonderdienst-Rahmen SA, wobei jedoch das Synchronwort für den Sonderdienst-Überrahmen geringfügig von den übrigen Synchronworten verschieden ist. Im ersten Sonderdienst-Rahmen SA des Sonderdienst-Überrahmens SAÜ sind Programmartinformationen für das Programm 1 und das Programm 2 enthalten.

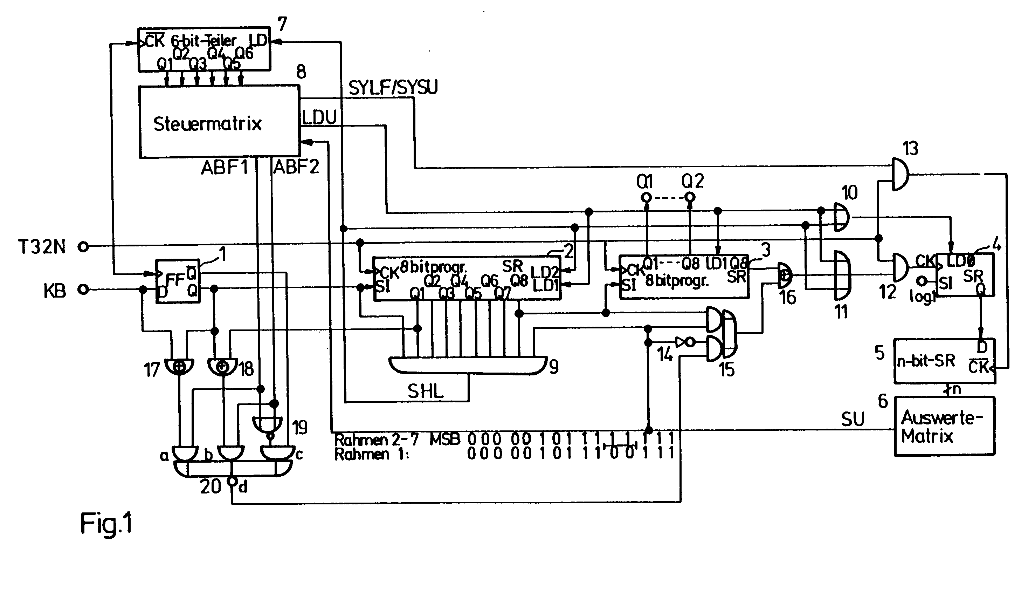

Die In Fig. 1 dargestellte Schaltung befindet sich nach dem Einschalten oder nach einem Synchronausfall zunächst in einer Suchbetriebsart. Der Datenstrom, also die Sonderdienstbit gelangen als KB zu einem Flip Flop 1, das mit einem der Folge der KB frequenzgleichen Takt T32N getaktet wird. Dem Flip Flop 1 schließt sich ein Schieberegister 2 an, dem wiederum ein Schieberegister 3 folgt. Das Flip Flop 1 und das Schieberegister 2 können auch als Teil-Schieberegister zu einem gemeinsamen Schieberegister 1,2 mit einer weiteren Speicherzelle zusammengefaßt werden, wobei jedoch die erste Speicherzelle nur vorgeschaltet ist und nicht mit Sollwerten geladen wird.

Mit den Ausgängen Q1 bis Q8 der Speicherzellen des Schieberegisters 2 sind Eingänge eines logischen Verknüpfungsgliedes 9 verbunden. Erscheint an den Ausgängen Q1 bis Q8 eine Datenkonfiguration, die dem Synchronwort entspricht, so tritt am Ausgang des UND-Verknüpfungsgliedes 9 ein Erkennungs- und/oder Überwachungssignal SHL auf. Dieses löst bei einer Steuerschaltung 7,8 einmal einen Zählvorgang aus, um nach Ablauf der Rahmendauer eine positive Erkennung des Synchronwortes abfragen zu können, und ruft zum anderen einen Ladebefehl LD2 auf, der in das Schieberegister 2 einen Sollwert lädt, der einem vorangegangenen Teil des gerade erkannten Synchronwortes entspricht. Da die das Schieberegister 2 verlassenden Daten in das Schieberegister 3 übernommen werden, sind Teile längerer Synchronworte noch verfügbar. Die Schaltungsanordnung ist so in der Lage, auch Synchronworte überprüfen zu können, die mehr als in dem Schieberegister 2 vorhandene Stellen aufweisen. Zur Überprüfung dieser Stellen des Synchronwortes werden der Ausgang des Schieberegisters 3 und der Ausgang de Schieberegisters 2, letzterer über eine Verknüpfungsschaltung 15 mit einem EXCLUSIV-ODER-Verknüpfungsglied 16 verbunden. An dessen Ausgang erscheint bei Übereinstimmung der Bit des Sollwertes und des im Schieberegister 3 gespeicherten IST-Wertes ein logisch L, bei Nichtübereinstimmung ein logisch H.

Dieses Signal gelangt über ein Verknüpfungsglied 12 durch den Takt T32N getaktet in einen Fehlerzähler 4 und von dort nach einem von der Steuerschaltung 8 abgegebenen Abfragebefehl SYSU in der Betriebsart "Suchen" und SYLF in der Betriebsart "Überwachen" in ein Schieberegister 5, das die aufeinanderfolgende Anzahl nicht vorhandener oder fehlerbehafteter Synchronworte festhält. Eine mit einem Ausgang des Schieberegisters 5 verbundene Auswertematrix 6 bestimmt, wann bei der Erkennung oder Überwachung von Synchronworten von einer Betriebsart "Überwachung" in eine Betriebsart "Suchen" umgeschaltet oder von dieser wieder in die Betriebsart "Überwachen" zurückgeschaltet wird.

Wird nach dem Einschalten erstmals ein Synchronwort richtig erkannt, so wird der logische Pegel von SU am Ausgang der Auswertematrix 6 verändert, d.h. die Betriebsart "Suchen" beendet. Nach einem vom Zähler 7 bestimmten Zeitpunkt, der unmittelbar vor dem Eintreffen eines Synchronwortes liegt, werden Soll-Werte durch einen Ladebefehl LDU als LD1 am Schieberegister 2 und 3 in dieselben übernommen. Nun wird gleich mit dem ersten Bit des Synchronwortes ein Vergleich durchgeführt, indem die ankommenden Daten von einem Verknüpfungsglied 20 über ein Verknüpfungsglied 15 zu dem einen Eingang des EXCLUSIV-ODER-Verknüpfungsgliedes 16 geführt werden, während die aus dem Schieberegister 3 ausgelesenen Soll-Werte am anderen Eingang anliegen. Anschließend wird ein Bit für Bit-Vergleich vorgenommen, wobei evtl. Fehler wiederum im Fehlerzähler 4 gespeichert werden.

Das Schieberegister 3 wird ursprünglich für andere Zwecke verwendet, nämlich zur Übertragung von Daten in einen angeschlossenen Datenprozessor. Besonders vorteilhaft ist in diesem Fall, daß in dem Datenstrom nach den obengenannten Spezifikationen vor dem Eintreffen der Synchronworte irrelevante Daten übertragen werden, die nicht von dem angeschlossenen Datenprozessor verarbeitet werden müssen. Es ist daher möglich, die Datenübernahme in den Datenprozessor zu unterbrechen und statt dessen den vollständigen Soll-Wert des erwarteten Synchronwortes in die Schieberegister 2 und 3 zu laden, wobei der zeitlich erste Teil in das Schieberegister 3 und der zeitlich zweite Teil in das Schieberegister 2 übernommen wird.

Ein Problem bereitet noch die Erkennung der Synchronworte, die jeweils den Sonderdienst-Überrahmen einleiten. Diese unterscheiden sich von den übrigen Synchronworten dadurch, daß die 11. und 12. Stelle einen anderen logischen Zustand aufweisen. Um in diesem Fall den Fehlerzähler 4 nicht zu setzen, wird das eintreffende Synchronwort in jedem Fall so umgeformt, daß es dem häufig auftretenden Synchronwort entspricht. Das heißt das häufig auftretende Synchronwort wird nicht verändert und aus dem selten auftretenden Synchronwort mit der veränderten 11. und 12. Stelle wird das häufig auftretende Synchronwort gebildet. Auf diese Weise wird sichergestellt, daß die unterschiedlichen Synchronworte gleich behandelt werden und nicht als Fehler angezeigt werden.

Die hierzu dienende Datenänderungsschaltung umfaßt zwei EXCLUSIV-ODER-Verknüpfungsglieder 17 und 18, von denen das erste zwischen dem D-Eingang und dem Q-Ausgang des Flip Flop 1 und das zweite zwischen dem Q-Ausgang des Flip Flop 1 und dem Q1-Ausgang des Flop Flop 2 angeordnet ist. Die Ausgänge der EXCLUSIV-ODER-Verknüpfungsglieder 17 und 18 sind mit Ausgängen der Steuermatrix 8 verknüpft, an denen zu Zeiten, an denen die 11. oder 12. Stelle des Synchronwortes auftritt, Abfragesignale ABF1 und ABF2 erzeugt werden. Hierdurch wird am Ausgang des Verknüpfungsgliedes 20d unabhängig vom logischen Zustand der Stellen, sofern die 11. und 12. Stelle Gleichheit der Polarität aufweisen, ein einheitlicher logischer Zustand erzeugt.

## Patentansprüche

1. Schaltungsanordnung zur Erkennung und/oder Überwachung in einem seriellen Datenstrom enthaltener Synchronworte, wobei die Schaltungsanordnung ein erstes Schieberegister aufweist, in das der Datenstrom fortlaufend eingeschrieben wird dadurch gekennzeichnet, daß Ausgänge (Q1. Q8) der Speicherzellen des einem Schieberegisters (1, 2) durch ein logisches UND-Verknüpfungsglied (9) verknüpft sind, an dessen Ausgang ein Erkennungs - oder Überwachungssignal (SHL) auftritt, daß dem ersten Schieberegister (1, 2) ein zweites Schieberegister (3) nachgeschaltet ist, in das der aus dem ersten Schieberegister (1, 2) ausgelesene Datenstrom eingeschrieben wird, daß durch das Erkennungssignal (SHL) aus dem UND-Verknüpfungsglied (9) ein erster Sollwert in das erste Teil-Schieberegister (2) geladen wird und das die Ausgänge des ersten (1, 2) und zweiten Schieberegisters (3) durch ein logisches Verknüpfungsglied (16) verknüpft sind, an dessen Ausgang ein zweites Erkennungssignal oder Überwachungsssignal auftritt.

2. Schaltungsanordnung nach Anspruch 1, **dadurch gekennzeichnet**, daß die Steuerschaltung einen Zähler (7) enthält, der vom ersten Erkennungssignal auf einen Anfangswert gesetzt wird, daß durch einen einem vorgegebenen Zählstand zugeordneten Ausgang ein Schaltsignal (LDU) in einer Überwachungsbetriebsart abgegeben wird wodurch ein zweiter Sollwert in das erste Teil-Schieberegister (2) und ein dritter Sollwert in das zweite Schieberegister (3) geladen wird und daß der Ausgang des zweiten Schieberegisters (3) durch ein logisches Verknüpfungsglied (15,16) mit einem den ankommenden Datenstrom führenden Schaltglied (20) verbunden ist, wobei an dem Ausgang des Verknüpfungsgliedes (16) ein Überwachungssignal auftritt.

3. Schaltungsanordnung nach Anspruch 1 oder 2, **dadurch gekennzeichnet**, daß das den ankommenden Datenstrom führende Schaltglied (20) eine Datenänderungsschaltung enthält, die eine der Anzahl der zu ändernden Daten entsprechende Anzahl von EXCLUSIV-ODER-Verknüpfungsgliedern (17,18) umfaßt, deren Eingänge mit Ausgängen von benachbarten Speicherzellen (D,Q;Q,Q1) der Schieberegister (1,2) verbunden sind, und daß die Ausgänge der EXCLUSIV-ODER-Verknüpfungsglieder (17,18) mit Ausgängen der Steuerschaltung (8) durch UND-Verknüpfungsglieder (20a,20b) verknüpft sind, wobei an den Ausgängen der Steuerschaltung (8) zum Zeitpunkt der zu ändernden Daten Steuersignale (ABF1,ABF2) anstehen.

## Claims

1. Circuit arrangement for the recognition and/or monitoring of synchronising words contained in a serial data stream, wherein the circuit arrangement has a first shift register into which the data stream is continuously written, characterised in that, outputs (Q1, Q8) of the storage cells of the first shift register (1, 2) are connected by a logical AND element (9) at whose output a recognition or monitoring signal (SHL) appears, that a second shift register (3), into which the data stream read out from the first shift register (1, 2) is written, is connected downstream of the first shift register (1, 2), that a first reference value is loaded into the first partial shift register (2) by the recognition signal (SHL) from the AND element (9) and that the outputs of the first (1, 2) and second shift register (3) are connected by a logical combining element (16) at whose output a second recognition signal or monitoring signal appears.

2. Circuit arrangement in accordance with Claim 1, characterised in that, the control circuit contains a counter (7) which is set to a starting value by the first recognition signal, that a switching signal (LDU) in a monitoring mode is emitted through an output associated with a predetermined counter position whereby a second reference value is loaded into the first partial shift register (2) and a third reference value into the second shift register (3) and that the output of the second shift register (3) is connected to a switching member (20) conveying the arriving data stream by a logical element (15, 16) whereby a monitoring signal appears at the output of the logical element (16).

3. Circuit arrangement in accordance with Claim 2 or 3, characterised in that, the switching member (20) conveying the arriving data stream contains a data modifying circuit which comprises a number of EXCLUSIVE-OR elements (17, 18) corresponding to the number of data items that are to be modified and whose inputs are connected to outputs of adjacent storage cells (D, Q; Q, Q1) of the shift register (1, 2) and that the outputs of the EXCLUSIVE-OR elements (17, 18) are connected to outputs of the control circuit (8) by AND elements (20a, 20b) whereby control signals (ABF1, ABF2) occur on the outputs of the control circuit (8) at the time point of the data items that are to be modified.

## Revendications

1. Dispositif de circuit pour reconnaître et/ou contrôler des mots de synchronisation contenus dans un flux de données série, le dispositif de circuit présentant un premier registre à décalage dans lequel le flux de données est mis en mémoire de manière continue, caractérisé en ce que des sorties (Q1, Q8) des cellules de mémoire du premier registre à décalage (1, 2) sont enchaînées par un élément logique ET (9) à la sortie duquel il apparaît un signal de reconnaissance ou de contrôle (SHL), qu'un second registre à décalage (3) est placé en aval du premier registre à décalage (1, 2), registre (3) dans lequel le flux de données extrait du premier registre à décalage (1, 2) est enregistré, qu'une première valeur de consigne est chargée par le signal de reconnaissance (SHL) en provenant de l'élément logique ET (9) dans le premier registre à décalage partiel (2) et que les sorties du premier (1, 2) et du second registre à décalage (3) sont enchaînées par un élément logique (16) à la sortie duquel il apparaît un second signal de reconnaissance ou signal de contrôle.

2. Dispositif de circuit selon la revendication 1 **caractérisé en ce** que le circuit de commande contient un compteur (7) qui est mis par le premier signal de reconnaissance sur une valeur de début, qu'un signal de commutation (LDU) est émis dans un mode de contrôle par une sortie affectée à un état de comptage prédéterminé, ce par quoi une seconde valeur de consigne est chargée dans le premier registre à décalage partiel (2) et une troisième valeur de consigne dans le second registre à décalage (3) et que la sortie du second registre à décalage (3) est reliée par un élément logique (15, 16) à un élément de commutation (20) qui guide le flux de données qui arrive, un signal de contrôle apparaissant à la sortie de l'élément logique (16).

3. Dispositif de circuit selon la revendication 1 ou 2, **caractérisé en ce** que l'élément de commutation (20) qui guide le flux de données qui arrive contient un circuit de modification de données qui comprend un nombre d'éléments logiques OU exclusifs (17, 18) qui correspond au nombre des données à modifier, éléments dont les entrées sont reliées aux sorties de cellules de mémoire voisines (D, Q ; Q, Q1) des registres à décalage (1, 2) et que les sorties des éléments logiques OU exclusifs (17, 18) sont enchaînées aux sorties du circuit de commande (8) par des éléments logiques ET (20a, 20b), des signaux de commande (ABF1, ABF2) étant présents aux sorties du circuit de commande (8) au moment des données à modifier.
